Europäisches Patentamt

European Patent Office

Office européen des brevets

(11) Veröffentlichungsnummer : **0 021 290**
**B1**

(12) **EUROPÄISCHE PATENTSCHRIFT**

(45) Veröffentlichungstag der Patentschrift :
08.02.84

(51) Int. Cl.³ : **H 04 Q 11/04, H 04 L 7/04**

(21) Anmeldenummer : 80103323.4

(22) Anmeldetag : 13.06.80

(54) **Verfahren und Schaltungsanordnung zur Synchronisierung bei der Übertragung von digitalen Nachrichtensignalen.**

(30) Priorität : 20.06.79 DE 2924922

(43) Veröffentlichungstag der Anmeldung :
07.01.81 Patentblatt 81/01

(45) Bekanntmachung des Hinweises auf die Patenterteilung : 08.02.84 Patentblatt 84/06

(84) Benannte Vertragsstaaten :
AT CH FR GB IT LI NL SE

(56) Entgegenhaltungen :
AT-B-    332 461
DE-A- 2 619 333
DE-A- 2 743 252
DE-A- 2 841 855
DE-A- 2 842 371

(73) Patentinhaber : SIEMENS AKTIENGESELLSCHAFT
Berlin und München Wittelsbacherplatz 2
D-8000 München 2 (DE)

(72) Erfinder : Zemanek, Josef, Dipl.-Ing.
Aldenbachstrasse 144a
D-8000 München 71 (DE)

## Verfahren und Schaltungsanordnung zur Synchronisierung bei der Übertragung von digitalen Nachrichtensignalen

Die Erfindung betrifft ein Verfahren zur Synchronisierung bei der Übertragung von digitalen Nachrichtensignalen auf Zweidrahtübertragungsleitungen zwischen einer übergeordneten Einrichtung, insbesondere einer PCM-Zeitmultiplexvermittlungsstelle und einer untergeordneten Einrichtung, insbesondere einer digitalen Teilnehmerstation, in Form von wenigstens ein Nachrichtensignalwort und ein vorangestelltes Synchronisierwort umfassenden Nachrichtensignalblöcken, wobei die in den beiden Arten von Einrichtungen die Zeitverhältnisse bestimmenden Taktgeneratoren plesiochron zueinander arbeiten, wie es beispielsweise aus der DE-OS 26 19 333 bekannt ist.

Bei der erwähnten Übertragung von digitalen Nachrichtensignalen in Form von Nachrichtensignalblöcken muß in erster Linie dafür Sorge getragen sein, daß diese Blöcke zeitgerecht empfangen werden, wozu das erwähnte Synchronisierwort herangezogen wird. Es muß hierbei insbesondere Sorge getragen sein, daß eine Nachbildung des Synchronisierwortes durch über einen längeren Zeitraum hinweg auftretende Nachrichtensignal-Bitkombinationen, sowie während der Empfangszeitspannen der betreffenden Einrichtungen auftretende Störungen nicht zu einer Fehlsynchronisierung führen.

Außer der erwähnten Nachrichtenblocksynchronisierung muß jedoch auch für eine Taktsynchronisierung Sorge getragen sein. Bei der vorausgesetzten Betriebsweise ergeben sich in diesem Zusammenhang insofern Probleme, als in der untergeordneten Einrichtung den ankommenden digitalen Nachrichtensignalen die Taktinformation entnommen werden muß, da eine getrennte Übertragung des Taktes nicht vorgesehen ist. Wenn die Nachrichtensignalblöcke für die beiden Übertragungsrichtungen wechselweise gesendet werden, ist eine solche Taktentnahme bei der untergeordneten Einrichtung immer nur während eines Teils der Übertragungsperiode, nämlich während der Empfangsperiode möglich, weswegen der übrige Teil der Übertragungsperiode, die Sendeperiode, und die Pause durch die Synchronisierungsschaltung überbrückbar sein muß.

Außer Phasenabweichungen, die durch nicht exakten Gleichlauf der Taktgeneratoren in den beiden Arten von Einrichtungen bedingt sind, treten auch kurzzeitige durch die Übertragung bedingte Phasenschwankungen auf. Da die Phasenschwankungen sich im Gegensatz zu den ersterwähnten Phasenabweichungen nicht aufsummieren, sollen sie, sofern sie eine bestimmte Größe nicht überschreiten, bei der Taktsynchronisierung unberücksichtigt bleiben, also nicht zu einer Neueinstellung der Phasenverhältnisse führen.

Aufgabe der vorliegenden Erfindung ist es daher, ein Verfahren anzugeben, das eine Taktsynchronisierung unter den genannten Voraussetzungen gewährleistet.

Erfindungsgemäß wird diese Aufgabe bei einem Verfahren der eingangs erwähnten Art dadurch gelöst, daß zum Zwecke der Taktsynchronisierung bei der untergeordneten Einrichtung vom durch den Taktgenerator festgelegten Bittakt sich jeweils periodisch wiederholende Gruppen unmittelbar aufeinanderfolgender, in ungeradzahliger Anzahl auftretender Zeitspannen abgeleitet werden, von denen die jeweils in der Mitte einer Gruppe liegende Zeitspanne mit einer Flanke der Bittaktimpulsfolge zusammenfällt, daß ferner aus einer Impulsflanke von Bits der von der übergeordneten Einrichtung her empfangenden Nachrichtensignalblöcke ein Empfangsimpuls abgeleitet wird, daß durch Phasenvergleich festgestellt wird, ob ein solcher Empfangsimpuls in eine der erwähnten Zeitspannen fällt, daß für den Phasenvergleich lediglich Empfangsimpulse herangezogen werden, die vom ersten Bit des Synchronwortes eines Nachrichtensignalblockes abgeleitet sind, daß sofern ein solcher Empfangsimpuls bei einer vorgegebenen Anzahl von aufeinanderfolgenden Synchronworten nicht in eine der erwähnten Zeitspannen fällt, zwischen dem Bittakt der untergeordneten Einrichtung und einem solchen von einem ersten Bit eines Synchronwortes abgeleiteten Empfangsimpuls einmalig Phasengleichheit hergestellt wird, daß, sofern ein solcher Empfangsimpuls in die mittlere Zeitspanne einer Gruppe fällt, die Zeitverhältnisse unverändert gelassen werden, daß, sofern ein solcher Empfangsimpuls in die der mittleren Zeitspanne einer Gruppe direkt vorangehende Zeitspanne fällt, die Periode des vom Taktgenerator der untergeordneten Einrichtung bestimmten Bittakts einmalig und wenn beim nächsten Phasenvergleich die erwähnte Koinzidenz noch fortbesteht, zweimal innerhalb einer Übertragungsperiode verkürt wird, daß, sofern der Empfangsimpuls in eine der der mittleren Zeitspanne der Gruppe mittelbar vorangehende Zeitspanne fällt, die Bittaktperiode schon nach Feststellung der ersten derartigen Koinzidenz, je nachdem, welche der Zeitspannen betroffen ist, drei- oder mehrmals innerhalb einer Übertragungsperiode verkürzt wird, und daß, sofern der Empffangsimpuls in eine der der mittleren Zeitspanne einer Gruppe mittelbar oder unmittelbar nachfolgenden Zeitspanne der Gruppe fällt, in entsprechender Weise die Bittaktperiode verlängert wird.

Die Genauigkeit des erfindungsgemäßen Verfahrens ist von der Anzahl der Bits der einen Art, von denen die erwähnten Empfangsimpulse abgeleitet werden, unabhängig, was besonders dann eine Rolle spielt, wenn die Nachrichtensignalblöcke nicht stochastische Informationen enthalten, sondern der Übertragung von sich langsam ändernden Daten dienen.

Durch Beschränkung der Auswertung des ersten Bit des Synchronwortes, das bei den meisten betreffenden Systemvorschlägen ein 1-Bit ist, wirkt das Verfahren unabhängig von der Anzahl der 1-Bit im übrigen Teil eines Nachrichtensignalblocks. Darüber hinaus ist hiermit die Synchronisierung auf dasjenige Bit des Nachrichtensignalblockes bezogen, das im geringsten Ausmaß von den erwähnten Phasenschwankungen betroffen ist, die bei der Synchronisierung unberücksichtigt bleiben sollen. Es kann daher die mittlere Zeitspanne der Gruppe von Zeitspannen, die den Bereich angibt, innerhalb dessen Phasenabweichungen ohne Folge bleiben, relativ klein gehalten werden. Andererseits ist durch die unterschiedliche Reaktion auf die einzelnen Phasenvergleichsergebnisse, nämlich in Abhängigkeit von der Größe der Phasenabweichung und von der Vorgeschichte des Phasenvergleichs, also ob vorangehend schon eine Phasenkorrektur stattgefunden hat oder nicht, eine weitgehende Flexibilität im Hinblick auf die erwähnten unterschiedlichen Betriebsfälle möglich.

In weiterer Ausgestaltung der Erfindung wird angegeben, wie eine Schaltungsanordnung zur Durchführung des Verfahrens zweckmäßig ausgestaltet sein kann. Diese Schaltungsanordnung ist dadurch gekennzeichnet, daß sie zum Phasenvergleich eine Anzahl von Koinzidenzgliedern aufweist, daß das erste derselben die Empfangsimpulse mit einem gleichzeitig mit dem ersten Bit der Synchronworte auftretenden Torsignal verknüpft, daß das zweite derselben als Ausgangssignal des ersten Koinzidenzgliedes mit dem die mittlere Zeitspanne der erwähnten Zeitspannengruppen bezeichnenden Signal verknüpft, daß weitere derselben zwei Koinzidenzgliedergruppen bilden, innerhalb deren sie im einen Fall den der mittleren Zeitspanne vorangehenden und im anderen Fall den dieser nachfolgenden Zeitspannen individuell zugeordnet sind und die das Ausgangssignal des ersten Koinzidenzgliedes mit dem die jeweils betreffende Zeitspanne angebenden Signal verknüpfen, daß ferner zum den Phasenvergleich dienenden Schaltungsteil ein NOR-Glied gehört, das die Ausgangssignale des der mittleren Zeitspanne zugeordneten Koinzidenzgliedes und die der Koinzidenzglieder der beiden Koinzidenzgruppen miteinander verknüpft, daß sie zur Auswertung der Phasenvergleichsergebnisse drei Schieberegister aufweist, von denen das erste mit seinem Serieneingang an den Ausgang des NOR-Gliedes angeschlossen ist und mit den Ausgängen der ersten und einer weiteren Stufe, deren Stufenabstand von der Anzahl der vor einer Synchronisierung nach festgestellter Koinzidenz mit einer Zeitspanne zu berücksichtigenden Anzahl von Synchronworten abhängt, an ein Koinzidenzglied angeschlossen ist, dessen Ausgangssignal die Herstellung des Synchronzustandes veranlaßt, von denen das zweite und das dritte mit seinem Serieneingang an den Ausgang jeweils eines anderen der einer der mittleren Zeitspanne unmittelbar benachbarten Zeitspannen zugeordneten Koinzidenzglieder der erwähnten Koinzidenzgliedergruppe angeschlossen ist, über seinen jeweiligen ersten Stufenausgang das die einmalige Bittaktverkürzung bzw. Bittaktverlängerung bewirkende Signal abgibt und mit seinen jeweiligen ersten und zweiten Stufenausgängen an die Eingänge eines registerindividuellen Koinzidenzgliedes angeschlossen ist, das ein die zweimalige Bittaktverkürzung bzw. Bittaktverlängerung bewirkende Signal abgibt, und daß die eine mehr als zweimalige Bittaktverlängerung bzw. Bittaktverkürzung bewirkenden Signale von den nicht mit Schieberegistern verbundenen Koinzidenzgliedern der beiden Koinzidenzgliedergruppen geliefert werden. Eine derartige Schaltungsanordnung läßt sich in besonders günstiger Weise in integrierter Schaltkreistechnik realisieren.

Nachstehend wird die Erfindung anhand von drei Figuren näher erläutert.

Figur 1 zeigt ein Blockschaltbild einer Schaltungsanordnung zur Durchführung des erfindungsgemäßen Verfahrens.

Figur 2 zeigt in mehr ins einzelne gehender Darstellung den dem Phasenvergleich und der Auswertung der Phasenvergleichsergebnisse dienenden Teile der Schaltungsanordnung gemäß Figur 1.

Figur 3 zeigt ein die Zeitverhältnisse bei den Schaltungsanordnungen gemäß Figur 1 und 2 veranschaulichendes Impulsdiagramm.

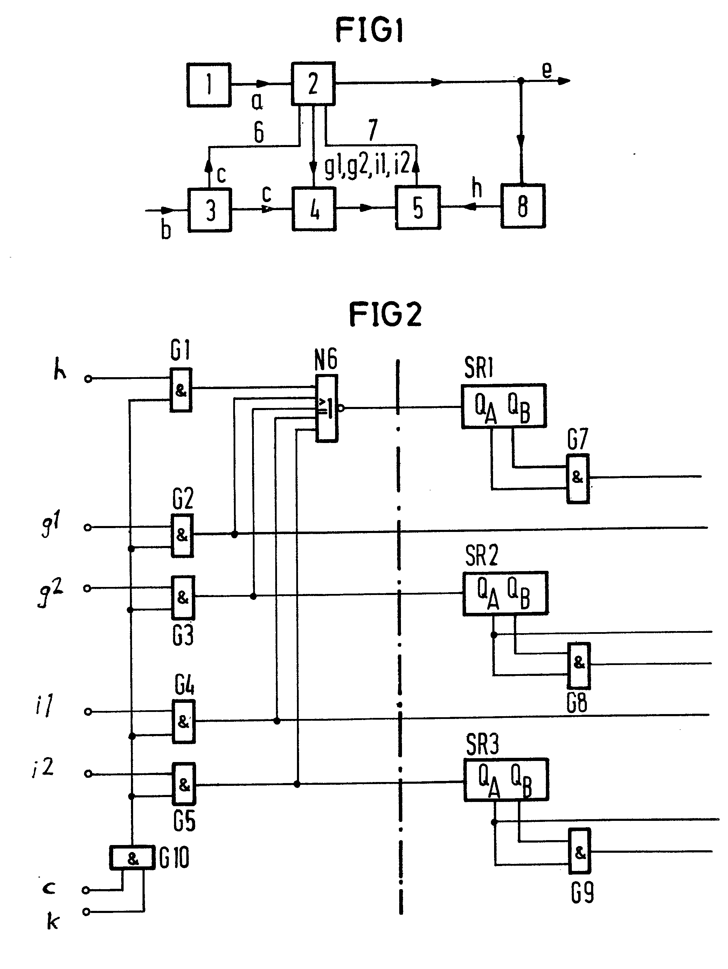

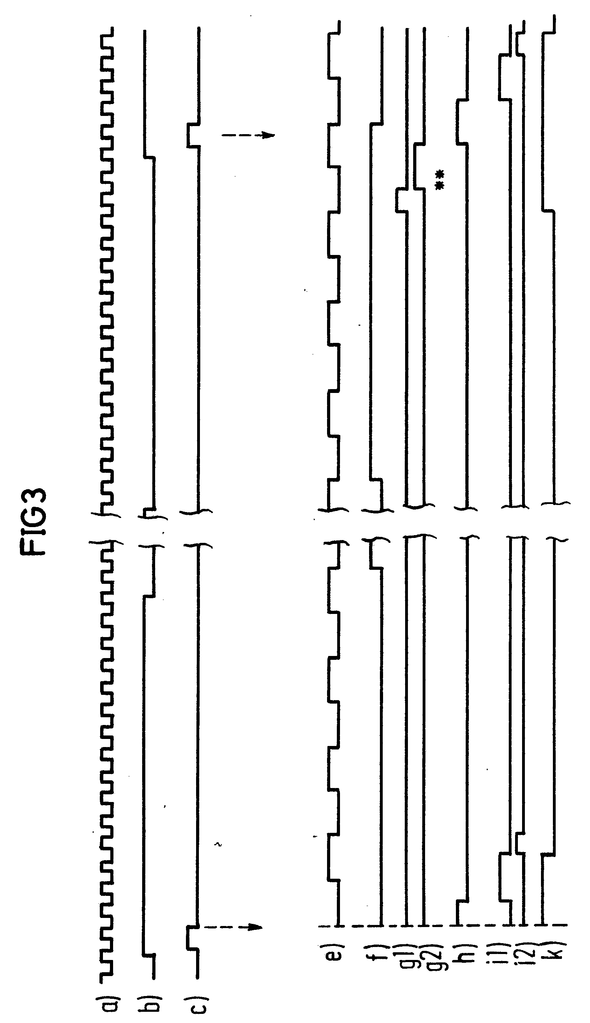

Die Figur 1 zeigt einen Taktgenerator 1, der die Zeitverhältnisse in der untergeordneten Einrichtung bestimmt und der beispielsweise mit einer Taktfrequenz von 8,192 MHz arbeitet, siehe Zeile a in Figur 3.

Mit Hilfe eines Frequenzteilers 2 wird dieser Takt auf den Bittakt heruntergeteilt, der der Informationsübertragung auf der Zweidrahtübertragungsleitung zugrunde liegt, die die untergeordnete Einrichtung mit einer übergeordneten Einrichtung verbindet. Dieser Bittakt beträgt beispielsweise 256 kHz, siehe Zeile f in Figur 3.

Der Frequenzteiler 2 wird auch dazu ausgenutzt, Gruppen sich periodisch wiederholender unmittelbar aufeinanderfolgender Zeitspannen vom erwähnten Bittakt abzuleiten. Diese Zeitspannen sind in Figur 3 in den Zeilen g1 bis i2 dargestellt. Die Anzahl der Zeitspannen einer solchen Zeitspannengruppe ist immer ungeradzahlig. Die in der Mitte einer Gruppe liegende Zeitspanne, siehe Zeile h in Figur 3 liegt zeitlich immer so, daß sie mit einer Flanke des Bittaktimpulses, siehe Zeile f zusammenfällt. Im vorliegenden Falle gehören zu einer solchen Gruppe von Zeitspannen noch zwei der erwähnten mittleren Zeitspanne mittelbar, bzw. unmittelbar vorangehende Zeitspannen, Zeile g1 bzw. g2 sowie zwei der erwähnten mittleren Zeitspanne unmittelbar bzw. mittelbar nachfolgende Zeitspannen, Zeile i1 bzw. i2 in Figur 3.

Durch einen Impulsformer 3 der Anordnung gemäß Figur 1, dem die bei der untergeordneten Einrichtung ankommenden Nachrichtensignalblöcke zugeführt werden, wird aus einer Impulsflanke der Bits dieser Nachrichtensignalblöcke ein Empfangsimpuls abgeleitet. In Zeile c sind zwei solcher von der Anstiegsflanke der 1-Bits der Nachrichtensignalblöcke abgeleiteten Empfangsimpulse dargestellt.

Die Anordnung gemäß Figur 1 zeigt ferner einen Phasenvergleicher 4, dem einerseits die erwähnten Empfangsimpulse gemäß Zeile c andererseits die Signale zugeführt werden, die die erwähnten Zeitspannen gemäß den Zeilen g1 bis i2 bestimmen. Dieser Phasenvergleicher ist so ausgebildet, daß er, je nachdem ob ein Empfangsimpuls in keines der Zeitintervalle, oder in ein bestimmtes dieser Zeitintervalle fällt, jeweils ein gesondertes Signal an eine Auswertelogik 5 liefert.

In Figur 1 ist außerdem ein Stationszähler 8 dargestellt, der die vom Frequenzteiler 2 gelieferten Bittakte zählt. Da, wie erwähnt, außer der hier behandelten Taktsynchronisierung unter Zuhilfenahme des Synchronwortes auch eine Blocksynchronisierung vorgesehen ist, auf die hier nicht näher eingegangen wird, ist der Stationszähler 8 in der Lage, im Zustand des Blocksynchronismus ein Signal zu liefern, das jeweils zusammen mit dem ersten Bit des Synchronwortes eines Nachrichtensignalblockes auftritt. Ein solches Signal ist in Zeile k dargestellt.

Der Phasenvergleicher 4 und die Auswertelogik 5 sind in Figur 2 mehr ins einzelne gehend dargestellt.

Der dem Phasenvergleich dienende linke Teil der Anordnung gemäß Figur 2 weist eine Anzahl von Koinzidenzgliedern sowie ein NOR-Glied auf. Das erste der Koinzidenzgliedern G10 verknüpft die Empfangsimpulse gemäß Zeile c in Figur 3 mit dem erwähnten Torsignal gemäß Zeile k.

Auf diese Art und Weise wird gewährleistet, daß nur diejenigen Empfangsimpulse für den Phasenvergleich herangezogen werden, die von dem ersten Bit des Synchronworts eines empfangenen Nachrichtensignalblockes abgeleitet wird.

Von den übrigen Koinzidenzgliedern ist das Koinzidenzglied G1 der in der Mitte der Zeitspannengruppen liegenden Zeitspanne gemäß Zeile h zugeordnet, die übrigen Koinzidenzglieder bilden zwei Gruppen, von denen die die Glieder G2 und G3 umfassende der mittleren Zeitspanne innerhalb einer Gruppe jeweils vorangehenden Zeitspannen zugeordnet ist und zwar das Koinzidenzglied G2 der mittelbar vorangehenden gemäß Zeile g1 und das Koinzidenzglied G3 der unmittelbar vorangehenden Zeitspanne gemäß Zeile g2. Die aus den Koinzidenzgliedern G4 und G5 gebildete Gruppe ist den der mittleren Zeitspanne innerhalb einer Zeitspannengruppe nachfolgenden Zeitspannen zugeordnet und zwar das Koinzidenzglied G5 die unmittelbar nachfolgende Zeitspanne gemäß Zeile i1 und das Koinzidenzglied G4 der mittelbar nachfolgenden Zeitspanne gemäß Zeile i2.

Der Ausgang des ersten Koinzidenzgliedes G10 ist mit jeweils dem einen Eingang sämtlicher der übrigen Koinzidenzglieder G1 bis G5 verbunden. Den jeweils anderen Eingängen der übrigen Koinzidenzglieder G1 bis G5 werden die die betreffenden Zeitspannen, denen diese Koinzidenzglieder zugeordnet sind, bezeichnenden Signale zugeführt.

Die Ausgänge der Koinzidenzglieder G1 bis G5 stehen mit jeweils einem anderen Eingang eines NOR-Gliedes N6 in Verbindung.

Der übrige rechte Teil der Anordnung gemäß Figur 2 zeigt die Auswertelogik, die der Einrichtung 5 in Figur 1 entspricht. Sie weist drei Schieberegister SR1 bis SR3 auf. Das mit SR1 bezeichnete erste dieser Schieberegister ist mit seinem Serieneingang an den Ausgang des erwähnten NOR-Gliedes G6 angeschlossen. Der Ausgang QA der ersten Stufe dieses Schieberegisters sowie der Ausgang QB einer weiteren Schieberegisterstufe sind mit jeweils einem anderen der beiden Eingänge eines Koinzidenzgliedes G7 verbunden. Die relative Lage der den Ausgang QB aufweisenden schieberegisterstufe hängt, wie noch erläutert werden wird, davon ab, in welcher Art und Weise bei einer Aufsynchronisierung nach Feststellung völlig undefinierter Phasenverhältnisse vorgegangen werden soll.

Der Serieneingang des zweiten Schieberegisters SR2 ist an den Ausgang des Koinzidenzgliedes G3 angeschlossen. Über den Ausgang QA seiner ersten Schieberegisterstufe gibt dieses Schieberegister ein Signal ab, das dazu dient, eine einmalige Verkürzung der Periode des Bittaktes zu bewirken. Der Ausgang QA dieser ersten Stufe und der Ausgang QB der zweiten Stufe des Schieberegisters SR2 sind an jeweils einen anderen der Eingänge eines Koinzidenzgliedes G8 angeschlossen, dessen Ausgangssignal dazu herangezogen wird, zweimalig eine Verkürzung des Bittaktes zu bewirken.

Das Schieberegister SR3 ist mit seinem Serieneingang an den Ausgang des Koinzidenzgliedes G5 angeschlossen, es liefert über seinen Ausgang QA ein Signal, das eine einmalige Verlängerung der Bittaktperiode bewirkt. Dieser Stufenausgang und der Ausgang der zweiten Schieberegisterstufe QB sind mit jeweils einem anderen Eingang eines Koinzidenzgliedes G9 verbunden, das ein Signal liefert, aufgrund dessen zweimalige nacheinander die Bittaktperiode verlängert wird.

Nachstehend wird auf die Betriebsweise des Schaltungsteils gemäß Figur 2 näher eingegangen.

Wie schon angedeutet, liefert das Koinzidenzglied G10 lediglich aufgrund solcher Empfangsimpulse ein Ausgangssignal, die vom ersten Bit des Synchronwortes eines Nachrichtensignalblocks abgeleitet sind. Fällt ein solcher Empfangsimpuls und damit das Ausgangssignal des Koinzidenzgliedes N10 mit keiner der Zeitspannen zusammen, liegen also völlig undefinierte Phasenverhältnisse vor, dann ist an keinem der Koinzidenzglieder G1 bis G5 die Verknüpfungsbedingung erfüllt, was im Zusammenhang mit den Verknüpfungsgliedern G1, G2, G3, G4 und G5 zur Folge hat, daß das NOR-Glied G6 ein entsprechendes Ausgangssignal in Form eines 1-Bits abgibt, das in das Schieberegister SR1 gelangt. Da die Verknüpfungsbedingung des an die Schieberegisterausgänge QA und QB angeschlossenen Koinzidenzgliedes G7 noch nicht erfüllt ist, hat dieser Vorgang zunächst noch keine Folgen. Unter der Voraussetzung, daß die weitere Schieberegisterstufe mit dem Registerausgang QB die zweite ist, führt jedoch die im Zusammenhang mit dem nachfolgenden Synchronwort festgestellte fehlende Koinzidenz dazu, daß nunmehr ein zweites 1-Bit in das Schieberegister SR1 eingetragen und das zuvor eingetragene 1-Bit in die zweite Stufe verschoben wird, so daß das Koinzidenzglied G7 nunmehr ein Signal abgibt, das dazu führt, daß einmalig Phasengleichheit zwischen dem Bittakt und einem Empfangsimpuls, vorzugsweise dem vom Synchronwort abgeleiteten Empfangsimpuls hergestellt wird. Der Abstand der Schieberegisterstufen mit den Ausgängen QA und QB, also die Anzahl der Übertragungsperioden, die bei festgestellter Asynchronität abgewartet werden, bis eine Synchronisierung vorgenommen wird, hängt, wie angedeutet, von den praktischen Bedürfnissen ab.

Wenn das ausgewählte Empfangssignal in die mittlere Zeitspanne gemäß Zeile h in Figur 3 fällt, ist lediglich beim Koinzidenzglied G1, an dessen einen Eingang das diese Zeitspanne angebende Signal gelangt, die Koinzidenzbedingung erfüllt, so daß an keinem der Ausgänge der Auswertelogik ein Ausgangssignal auftritt. Dies bedeutet, daß, wie gewünscht, die Phasenverhältnisse unverändert bleiben, also Phasenschwankungen, die sich innerhalb des mittleren Zeitbereichs bewegen, unberücksichtigt bleiben.

Wenn dagegen ein solcher ausgewählter Empfangsimpuls in eine der mittleren Zeitspanne direkt benachbarte Zeitspanne, beispielsweise in die vorangehend benachbarte Zeitspanne gemäß Zeile g2 fällt, was bedeutet, daß der in der betrachteten untergeordneten Einrichtung erzeugte Bittakt über den erlaubten Betrag hinaus nacheilt, dann ist beim Verknüpfungsglied G3 die Verknüpfungsbedingung erfüllt, mit der Folge, daß in das Schieberegister SR2 ein 1-Bit eingetragen wird. Wie schon angedeutet, wird als Folge hiervon über den Ausgang QA dieses Schieberegisters ein Signal abgegeben, das dazu führt, daß die Periode des Bittakts einmalig verkürzt wird. Sollte trotz einer sochen Korrektur beim Vergleich mit dem vom nachfolgenden Synchronwort abgeleiteten Empfangsimpuls nochmals eine derartige Phasenabweichung festgestellt werden, dann wird ein zweites 1-Bit in das Schieberegister SR2 eingetragen mit der Folge, daß nunmehr an beiden der Ausgänge QA und QB ein 1-bit auftritt und somit die Verknüpfungsbedingung des Koinzidenzgliedes G8 erfüllt ist. In diesem Falle tritt an dessen Ausgang ein Signal auf, das eine zweimalige Verkürzung der Periode des Bittaktes innerhalb einer Übertragungsperiode vorgenommen wird.

Sollte der Phasenvergleicher eine derart große Phasenabweichung ermitteln, daß der ausgewählte Empfangsimpuls in die der mittleren Zeitspanne mittelbar vorangehende Zeitspanne gemäß Zeile g1 fällt, dann ist die Verknüpfungsbedingung des Verknüpfungsgliedes G2 erfüllt. Das daraufhin von diesem Verknüpfungsglied abgegebene Ausgangssignal bewirkt eine dreimalige Verkürzung der Bittaktperiode innerhalb derselben Übertragungsperiode.

Entsprechende Verhältnisse liegen vor, wenn der in der untergeordneten Einrichtung erzeugte Bittakt dem der Übertragung der ankommenden Nachrichtensignalblöcke zugrundeliegenden Bittakt gegenüber voreilt, der ausgewählte Empfangsimpuls also in eine der der mittleren Zeitspanne nachfolgende Zeitspanne fällt. In diesem Fall werden über den Ausgang des Koinzidenzgliedes G5, den Ausgang QA des Schieberegisters SR3, über den Ausgang der Koinzidenzglieder G9 oder G4 Signale geliefert, die eine ein- bis dreimalige Verlängerung der Bittaktperiode innerhalb einer Übertragungsperiode zur Folge haben.

Die zeitliche Lage der Bittaktperioden, die entweder verkürzt oder verlängert werden, ist an sich für das Funktionieren des erfindungsgemäßen Verfahrens ohne Bedeutung. Zweckmäßigerweise werden jedoch hierfür Bittaktperioden ausgewählt, die am Anfang der Übertragungsperiode liegen, da Phasenfehler, die die hier gesetzten Grenzen übersteigen, in der Regel solche sind, die sich stetig vergrössern, was nach Überschreiten einer solchen Grenze möglichst vermieden werden soll.

Bei der Auswahl der Bittaktperioden, die einer Korrektur unterworfen werden, ist allerdings darauf zu achten, daß die Funktion von Schaltungen, die Bestandteil der betreffenden untergeordneten Einrichtung oder aber an diese angeschaltet sind, beispielsweise eine Anordnung zur Analog-Digital-Wandlung und Digital-Analog-Wandlung (Codec), wenn die untergeordnete Einrichtung eine digitale Teilnehmerstation ist, nicht beeinträchtigt wird.

Die Bemessung der Länge der erwähnten Zeitspanne, sowie die Anzahl derselben hängt von den praktischen Bedürfnissen ab, also insbesondere davon, wie groß die erwarteten Phasenschwankungen sind und welche Frequenzgenauigkeit den in der übergeordneten und in der untergeordneten Einrichtung den Bittakt bestimmenden Taktgeneratoren unterstellt werden kann.

## Ansprüche

1. Verfahren zur Synchronisierung bei der Übertragung von digitalen Nachrichtensignalen auf Zweidrahtübertragungsleitungen zwischen einer übergeordneten Einrichtung, insbesondere einer PCM-Zeitmultiplexvermittlungsstelle, und einer untergeordneten Einrichtung, insbesondere einer digitalen Teilnehmerstation, in Form von wenigstens ein Nachrichtensignalwort und ein vorangestelltes Synchronisierwort umfassenden Nachrichtensignalblöcken, wobei die in den beiden Arten von Einrichtungen die Zeitverhältungen

bestimmenden Taktgeneratoren plesiochron zueinander arbeiten, dadurch gekennzeichnet, daß zum Zwecke der Taktsynchronisierung bei der untergeordneten Einrichtung vom durch den Taktgenerator festgelegten Bittakt (f) sich jeweils periodisch wiederholende Gruppen unmittelbar aufeinanderfolgender, in ungeradzahliger Anzahl auftretender Zeitspannen (g1, g2, h, i1, i2) abgeleitet werden, von denen die jeweils in der Mitte einer Gruppe liegende Zeitspanne (h) mit einer Flanke der Bittaktimpulsfolge (f) zusammenfällt, daß ferner aus einer Impulsflanke von Bits der von der übergeordneten Einrichtung her empfangenen Nachrichtensignalblöcke ein Empfangsimpuls (c) abgeleitet wird, daß durch Phasenvergleich festgestellt wird, ob ein solcher Empfangsimpuls in eine der erwähnten Zeitspannen fällt, daß für den Phasenvergleich lediglich Empfangsimpulse (c) herangezogen werden, die vom ersten Bit des Synchronisierwortes eines Nachrichtensignalblockes abgeleitet sind, daß, sofern ein solcher Empfangsimpuls bei einer vorgegebenen Anzahl von aufeinanderfolgenden Synchronworten nicht in eine der erwähnten Zeitspannen (g1, g2, h, i1, i2) fällt, zwischen dem Bittakt der untergeordneten Einrichtung und einem solchen von einem ersten Bit eines Synchronisierwortes abgeleiteten Empfangsimpuls einmalig Phasengleichheit hergestellt wird, daß, sofern ein solcher Empfangsimpuls in die mittlere Zeitspanne (h) einer Gruppe fällt, die Zeitverhältnisse unverändert gelassen werden, daß, sofern ein solcher Empfangsimpuls in die der mittleren Zeitspanne einer Gruppe direkt vorangehende Zeitspanne (g2) fällt, die Periode des vom Taktgenerator der untergeordneten Einrichtung bestimmten Bittaktes (f) einmalig, und wenn beim nächsten Phasenvergleich die erwähnte Koinzidenz noch fortbesteht, zweimal innerhalb einer Übertragungsperiode verkürzt wird, daß, sofern der Empfangsimpuls in eine der mittleren Zeitspanne (h) der Gruppe mittelbar vorangehenden Zeitspannen (g1) fällt, die Bittaktperiode schon nach Feststellung der ersten derartigen Koinzidenz, je nachdem, welche der Zeitspannen betroffen ist, drei- oder mehrmals innerhalb einer Übertragungsperiode verkürzt wird, und daß, sofern der Empfangsimpuls in eine der mittleren Zeitspannen (h) einer Gruppe mittelbar (i2) oder unmittelbar (i1) nachfolgende Zeitspanne der Gruppe fällt, in entsprechender Weise die Bittaktperiode verlängert wird.

2. Schaltungsanordnung zur Durchführung des Verfahrens nach Anspruch 1, dadurch gekennzeichnet, daß sie zum Phasenvergleich eine Anzahl von Koinzidenzgliedern (G10 bis G5) aufweist, daß das erste (G10) derselben die Empfangsimpulse (c) mit einem gleichzeitig mit dem ersten Bit der Synchronworte auftretenden Torsignal (k) verknüpft, daß das zweite (G1) derselben das Ausgangssignal des ersten Koinzidenzgliedes (G10) mit dem die mittlere Zeitspanne (h) der erwähnten Zeitspannengruppe bezeichnenden Signal verknüpft, daß weitere derselben zwei Koinzidenzgliedergruppen (G2, G3 bzw. G4, G5) bilden, innerhalb deren sie in einem Fall (G2, G3) den der mittleren Zeitspanne vorangehenden (g2, g1) und im anderen Fall den dieser nachfolgenden Zeitspannen (i1, i2) individuell zugeordnet sind und die das Ausgangssignal des ersten Koinzidenzgliedes (G10) mit dem die jeweils betreffenden Zeitspanne angebenden Signal verknüpfen, daß ferner zum dem Phasenvergleich dienenden Schaltungsteil ein NOR-Glied (N6) gehört, das die Ausgangssignale des der mittleren Zeitspanne zugeordneten Koinzidenzgliedes (G1) und die der Koinzidenzglieder (G3 bis G5) der beiden Koinzidenzgliedergruppen miteinander verknüpft, daß sie zur Auswertung der Phasenvergleichsergebnisse drei Schieberegister (SR1 bis SR3) aufweist, von denen das erste mit seinem Serieneingang an den Ausgang des NOR-Gliedes (N6) angeschlossen ist und mit den Ausgängen der ersten (QA) und einer weiteren Stufe (QB), deren Stufenabstand von der Anzahl der vor einer Synchronisierung nach festgestellter Koinzidenz mit einer Zeitspanne zu berücksichtigenden Anzahl von Synchronworten abhängt, an ein Koinzidenzglied (G7) angeschlossen ist, dessen Ausgangssignal die Herstellung des Synchronzustandes veranlaßt, von denen das zweite und das dritte (SR2, SR3) mit seinem Serieneingang an den Ausgang jeweils eines anderen der einer der mittleren Zeitspanne unmittelbar benachbarten Zeitspannen zugeordneten Koinzidenzglieder (G3, G5) der erwähnten Koinzidenzgliedergruppen angeschlossen ist, über seinen jeweiligen ersten Stufenausgang (QA) das die einmalige Bittaktverkürzung bzw. Bittaktverlängerung bewirkende Signal abgibt und mit seinen jeweiligen ersten und zweiten Stufenausgängen (QA, QB) an die Eingänge eines registerindividuellen Koinzidenzgliedes (G8, G9) angeschlossen ist, das ein die zweimalige Bittaktverkürzung bzw. Bittaktverlängerung bewirkendes Signal abgibt, und daß die eine mehr als zweimalige Bittaktverlängerung bzw. Bittaktverkürzung bewirkenden Signale von den nicht mit Schieberegistern verbundenen Koinzidenzgliedern (G2, G4) der beiden Koinzidenzgliedergruppen geliefert werden.

**Claims**

1. Method for synchronisation in the transmission of digital information signals on two-wire transmission lines between a superordinate device, in particular a PCM t. d. m. exchange, and a subordinate device, in particular a digital subscriber station, in the form of information signal blocks which include at least one information signal word and a preceding synchronising word, wherein the clock pulse generators which determine the timing conditions in the two types of devices operate plesiochronously to one another, characterised in that for the purposes of clock pulse synchronisation in the subordinate device, from the bit rate (f) determined by the clock pulse generator there are derived periodically recurring groups of directly consecutive time intervals (g1, g2, h, i1, i2) which occur in an odd number and of which the time interval (h) located in the middle of a group coincides with a flank of the bit rate pulse sequence (f), that furthermore a received pulse (c) is derived from a pulse flank of bits of the information signal blocks received from the superordinate device, that by means of phase comparison it is established whether such a received pulse falls in one of the aforementioned time intervals, that only received pulses (c) which are derived from the first bit of the synchronising word of an information signal block are used for the phase comparison, that if, in the case of a predetermined number of consecutive synchronising words, a received pulse of this kind does not fall into one of the aforementioned time intervals (g1, g2, h, i1, i2) phase equality is established once between the bit rate of the subordinate device and a received pulse of this kind derived from a first bit of a synchronising word, that if such a received pulse falls in the middle time interval (h) of a group the timing conditions remain unchanged, that if such a received pulse falls into the time interval (g2) which directly precedes the middle time interval of a group the period of the bit rate (f) determined by the pulse generator of the subordinate device is shortened once within a transmission period whereas if the aforementioned coincidence still exists at the time of the next phase comparison it is shortened twice, that if the received pulse falls into one of the time intervals (g1) which indirectly precedes the middle time interval (h) the bit rate period is shortened immediately following the establishment of the first such coincidence either three or several times within a transmission period depending upon which of the time intervals is concerned, and that if the received pulse falls into a time interval within the group which either directly (i2) or indirectly (i1) follows the middle time intervals (h) of a group, the bit rate period is extended correspondingly.

2. Circuit arrangement for the implementation of the method claimed in claim 1, characterised in that for the purposes of phase comparison it has a number of coincidence gates (G10 to G5), that the first (G10) thereof logic-links the received pulses (c) to a gate signal (k) which occurs simultaneously with the first bit of the synchronising words, that the second (G1) thereof logic-links the output signal for the first coincidence gate (G10) to the signal which designates the middle time interval (h) of the aforementioned group of time intervals, that further thereof form two groups of coincidence gates (G2, G3 and G4, G5) within which they are in the one case (G2, G3) individually assigned to the time intervals (g2, g1) which precede the middle time interval and in the other case they are individually assigned to the time intervals (i1, i2) which follow the middle time interval, and which logic-link the output signal of the first coincidence gate (G10) to the signal which indicates the time interval in question, that furthermore the circuit component which serves to effect the phase comparison includes a NOR gate (N6) which logic-links the output signals of the coincidence gate (G1) assigned to the middle time interval with those of the coincidence gates (G3 to G5) of the two groups of coincidence gates, that for the analysis of the phase comparison results it has three shift registers (SR1 to SR3) of which the first is connected by its series input to the output of the NOR gate (N6) and is connected by the outputs of the first (QA) and a further stage (QB) — whose stage spacing is dependent upon the number of synchronising words to be taken into consideration prior to synchronisation following the establishment of coincidence with a time interval — to a coincidence gate (G7) whose output signal causes the synchronous state to be established, of which the second and third shift registers (SR2, SR3) are connected by their series input to the output of another member of the coincidence gates (G3, G5) which are assigned to one of the time intervals directly adjacent the middle time interval, within the aforementioned groups of coincidence gates, emit the signal which effects a one-fold shortening or extension of the bit rate via their respective first stage output (QA), and are connected by their first and second stage outputs (QA, QB) to the inputs of a register-individual coincidence gate (G8, G9) which emits a signal which causes two-fold shortening or extension of the bit rate, and that the signals which effect more than a two-fold extension or shortening of the bit rate are supplied by those coincidence gates (G2, G4) within the two groups of coincidence gates which are not connected to shift registers.

**Revendications**

1. Procédé de synchronisation lors de la transmission de signaux d'information numériques sur des lignes de transmission bifilaires entre un dispositif prioritaire, notamment un centre de commutation à multiplexage par répartition dans le temps PCM, et un dispositif subordonné, notamment un poste d'abonné numérique, sous la forme de blocs de signaux d'information comprenant au moins un mot de signal d'information et un mot de synchronisation placé devant, les générateurs de cadence qui déterminent les rapports de temps dans les deux types de dispositifs travaillant de façon plésiochrone l'un par rapport à l'autre, caractérisé par le fait que pour la synchronisation de cadence dans le cas du dispositif subordonné, à partir de la cadence des bits (f) déterminée par le générateur de cadence sont dérivés des groupes, qui se répètent respectivement périodiquement, d'intervalles de temps (g1, g2, h, i1, i2) qui se suivent directement et qui apparaissent en nombre impair, parmi lesquels l'intervalle de temps (t) qui se trouve respectivement au milieu d'un groupe coïncide avec un flanc de la séquence d'impulsions de cadence des bits (f), qu'en outre à partir d'un flanc d'impulsion de bits des blocs de signaux d'information reçus à partir du dispositif prioritaire est dérivée une impulsion de réception (c), que par une comparaison de phase on détermine si une telle impulsion de réception tombe dans un des intervalles de temps mentionnés, que pour la comparaison de phase on utilise simplement des impulsions de réception (c) qui sont dérivées du premier bit du mot de synchronisation d'un bloc de signaux d'information, que, dans la mesure où une telle impulsion de réception ne tombe pas dans un des intervalles de temps mentionnés (g1, g2, h, i1, i2) pour un nombre prédéterminé de mots de synchronisation successifs, une égalité de phase est établie exceptionnellement entre la cadence des bits du dispositif subordonné et une telle impulsion de réception dérivée d'un premier bit d'un mot de synchronisation, que, dans la mesure où une telle impulsion de réception tombe dans l'intervalle de temps central (h) d'un groupe, les rapports de temps sont conservés sans être modifiés, que, dans la mesure où une telle impulsion de réception tombe dans l'intervalle de temps (g2) précédant directement l'intervalle de temps central d'un groupe, la période de la cadence des bits (f) déterminée par le générateur de cadence du dispositif subordonné est raccourcie une fois à l'intérieur d'une période de transmission, et deux fois lorsque lors de la comparaison suivante la coïncidence mentionnée subsiste encore, que, dans la mesure où l'impulsion de réception tombe dans un des intervalles de temps (g1) précédant indirectement l'intervalle de temps central (h) du groupe, la période de cadence des bits est raccourcie trois fois ou plus à l'intérieur d'une période de transmission, suivant celui des intervalles de temps qui est concerné, déjà après détermination de la première telle coïncidence, et que, dans la mesure où l'impulsion de réception tombe dans un intervalle de temps du groupe qui suit l'intervalle de temps central (h) d'un groupe indirectement (i2) ou directement (i1), la période de cadence des bits est prolongée de façon correspondante.

2. Circuit pour la mise en œuvre du procédé suivant la revendication 1, caractérisé par le fait que pour la comparaison de phase il comporte un certain nombre de circuits de coïncidence (G10 à G5), que le premier (G10) de ceux-ci combine les impulsions de réception (c) avec un signal de porte (k) apparaissant en même temps que le premier bit des mots de synchronisation, que le second (G1) de ceux-ci combine le signal de sortie du premier circuit de coïncidence (G10) avec le signal caractérisant l'intervalle de temps central (h) du groupe d'intervalles de temps mentionné, que d'autres de ces circuits de coïncidence forment deux groupes de circuits de coïncidence (G2, G3, G4, G5), à l'intérieur desquels ils sont associés individuellement dans un cas (G2, G3) aux intervalles de temps (g2, g1) qui précèdent l'intervalle de temps central et dans l'autre cas aux intervalles de temps (i1, i2) qui le suivent, et qui combinent le signal de sortie du premier circuit de coïncidence (G10) avec le signal indiquant l'intervalle de temps respectivement concerné, qu'en outre à la partie de circuit servant à la comparaison de phase appartient un circuit $\overline{OU}$ (N6) qui combine les signaux de sortie du circuit de coïncidence (G1) associé à l'intervalle de temps central et ceux des circuits de coïncidence (G3 à G5) des deux groupes de circuits de coïncidence, que pour l'évaluation des résultats de comparaison de phase il comporte trois registres à décalage (SR1 à SR3) dont le premier est relié, par son entrée série, à la sortie du circuit $\overline{OU}$ (N6) et est relié, par les sorties du premier étage (QA) et d'un autre étage (QB), dont l'écart par rapport au premier dépend du nombre de mots de synchronisation dont il faut tenir compte avant une synchronisation après qu'une coïncidence avec un intervalle de temps ait été déterminée, à un circuit de coïncidence (G7) dont le signal de sortie provoque l'établissement de l'état synchrone, et dont le second et le troisième (SR2, SR3) sont reliés, respectivement par leur entrée série, à la sortie d'un autre des circuits de coïncidence (G3, G5) des groupes de circuits de coïncidence mentionnés qui sont associés à un des intervalles de temps directement voisins de l'intervalle de temps central, second et troisième registres qui délivrent sur leur première sortie respective (QA) le signal provoquant le raccourcissement ou le prolongement unique de la cadence des bits, et quis sont reliés, par leurs première et seconde sorties d'étage respectives (QA, QB) aux entrées d'un circuit de coïncidence (G8, G9) individuel pour chaque registre qui délivre un signal provoquant deux fois le raccourcissement ou le prolongement de la cadence des bits, et que les signaux provoquant un raccourcissement ou un prolongement de la cadence des bits plus de deux fois sont fournis par les circuits de coïncidence (G2, G4) des deux groupes de circuits de coïncidence qui ne sont pas reliés aux registres à décalage.

# FIG 1

# FIG 2

FIG3

a) b) c) e) f) g1) g2) h) i1) i2) k)